## Europäisches Patentamt
## European Patent Office
## Office européen des brevets

(11) Numéro de publication: **0 251 839**
**B1**

(12) **FASCICULE DE BREVET EUROPÉEN**

(45) Date de publication du fascicule du brevet:
08.03.89

(21) Numéro de dépôt: 87401236.2

(22) Date de dépôt: 03.06.87

(51) Int. Cl.⁴: **B 01 D 1/06,** F 28 D 5/02

(54) Evaporateur à flot descendant équipé d'un dispositif de répartition du liquide.

(30) Priorité: 04.07.86 FR 8609724

(43) Date de publication de la demande:
07.01.88 Bulletin 88/1

(45) Mention de la délivrance du brevet:
08.03.89 Bulletin 89/10

(84) Etats contractants désignés:
BE DE ES GB IT NL

(56) Documents cité:
DE-A-1 519 742
DE-A-1 082 967
FR-A-1 252 969

(73) Titulaire: FIVES- CAIL BABCOCK, Société anonyme, 7 rue Montalivet, F-75383 Paris Cédex 08 (FR)

(72) Inventeur: Niel, Philippe, 33 Boulevard de Strasbourg, F-59100 Roubaix (FR)

(74) Mandataire: Fontanié, Etienne, FIVES- CAIL BABCOCK 90, rue Emile Zola B.P. 95, F-93123 La Courneuve Cédex (FR)

LIBER, STOCKHOLM 1989

## Description

La présente invention à trait aux évaporateurs à flot descendant utilisés, en particulier, pour la concentration par évaporation de liquides sensibles à la chaleur, par exemple des jus sucrés, et dans lesquels le liquide à concentrer s'écoule en couche mince sur la surface intérieure des tubes verticaux d'un faisceau chauffés extérieurement par de la vapeur. Elle concerne plus particulièrement les appareils de ce type équipés d'un dispositif de répartition du liquide constitué par une plaque perforée placée au-dessus de la plaque tubulaire supérieure.

Dans les appareils connus, le nombre de trous percés dans la plaque de distribution est au moins égal au nombre de tubes et, pour assurer une répartition uni forme du liquide entre tous les tubes, même aux débits les plus faibles, on est obligé de donner à ces trous des sections très faibles. Par conséquent, lorsque le liquide contient des solides en suspension, les trous s'obstruent rapidement ce qui nécessite des nettoyages fréquents.

Le but de la présente invention est de remédier à cet inconvénient et de réaliser un dispositif de distribution à plaque perforee dont les trous ont une section suffisante pour qu'il n'y ait pas de risque de bouchage.

L'évaporateur objet de la présente invention est caractérisé en ce que le nombre de trous de la plaque perforée est inférieur au nombre de tubes du faisceau, en ce que chaque trou de la plaque perforée se trouve à la verticale du tube central d'un groupe de tubes et en ce que l'orifice dudit tube central est recouvert d'un chapeau dont le diamètre est supérieur à celui du tube et dont le bord est situé à l'écart de la plaque tubulaire.

Les tubes entourant le tube central de chaque groupe peuvent aussi être coiffés de chapeaux, identiques ou non à ceux coiffant les tubes centraux. En variante, le chapeau coiffant le tube central de chaque groupe peut recouvrir partiellement les orifices des autres tubes du groupe.

Les chapeaux peuvent être suspendus à la plaque perforée du dispositif de répartition ou reposer sur la plaque tubulaire supérieure. Selon une forme de réalisation préférée, chaque chapeau est fixé sur l'extrémité supérieure d'une pièce allongée dont l'extrémité inférieure pénètre dans un tube et qui est munie de surfaces d'appui reposant sur la plaque tubulaire.

On utilisera, de préférence, des chapeaux bombés comportant un bord légèrement évasé et incliné d'environ 10° par rapport à la verticale.

Lorsqu'on utilise un seul chapeau pour chaque groupe de tubes, la dimension du chapeau coiffant le tube central sera telle qu'il recouvre environ le quart de la section des orifices des tubes entourant le tube central. En variante, le bord du chapeau peut être découpé en étoile, les branches de l'étoile recouvrant partiellement les zones de la plaque tubulaire comprises entre les tubes entourant le tube central; dans ce cas, le chapeau recouvrira au plus 20 % de la section des orifices desdits tubes.

D'autres caractéristiques de l'invention apparaitront à la lecture de la description qui suit et se réfère aux dessins l'accompagnant qui montrent, à titre d'exemple non-limitatif, plusieurs formes de réalisation de l'invention. Sur ces dessins:

La figure 1 est une représentation schématique, en coupe verticale, de la partie supérieure d'un évaporateur à flot descendant équipé d'un dispositif de répartition du liquide conforme à l'invention;

La figure 2 est une vue en plan d'une partie de la plaque tubulaire supérieure de l'évaporateur montrant la disposition des chapeaux recouvrant l'orifice des tubes;

La figure 3 est une vue partiellement en élévation et partiellement en coupe d'un chapeau;

La figure 4 est une vue de dessus du chapeau de la figure 3; et

Les figures 5 et 6 sont des vues similaires aux figures 3 et 4, respectivement, d'un chapeau de forme différente.

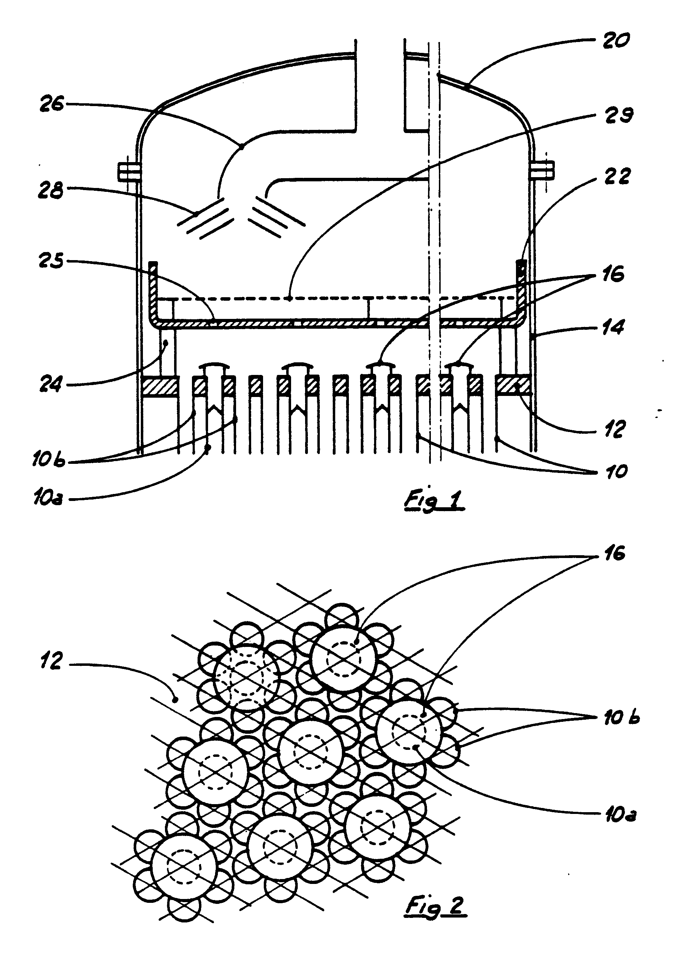

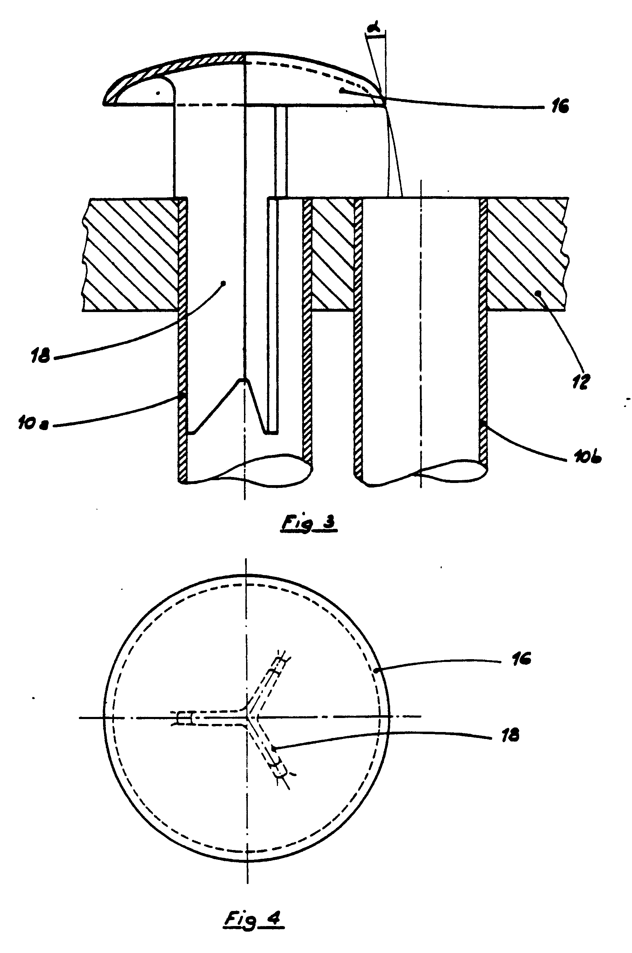

L'évaporateur représenté partiellement sur la figure 1 est constitué par un faisceau de tubes verticaux 10 dont les extrémités sont fixées dans des trous de deux plaques tubulaires supérieure et inférieure, seule la plaque tubulaire supérieure 12 étent représentée sur le dessin, et une enveloppe 14 entourant le faisceau de tubes et fixée de manière étanche sur les bords des plaques tubulaires pour former avec celle-ci une chambre de vapeur. Le faisceau comporte un grand nombre de tubes espacés les uns des autres et disposés de telle sorte qu'ils soient alignés suivant trois directions faisant entre elles des angles de 60°. Comme on peut s'en rendre compte sur la figure 2, on peut considérer que le faisceau est formé par la juxtaposition de plusieurs groupes de sept tubes, chaque groupe comportant un tube 10a central et six tubes 10b régulièrement répartis autour de celui- ci. L'orifice du tube central de chaque groupe est recouvert par un chapeau 16 qui recouvre aussi, mais en partie seulement, l'orifice des six autres tubes du groupe. Comme on le voit sur les figures 3 et 4 ces chapeaux sont circulaires et bombés et leur bord est légèrement évasé et fait un angle $\alpha$ d'environ 10° avec la verticale. Chaque chapeau est fixé sur l'extrémité supérieure d'un profilé à trois ailes 18 dont la partie inférieure est introduite dans le tube 10 respectif et qui comporte des épaulements reposant sur le bord du tube pour maintenir le chapeau à l'écart de la plaque tubulaire.

L'enveloppe 14 se prolonge vers le haut, au-dessus de la plaque tubulaire 12, et comporte à son extrémité supérieure une bride sur laquelle est fixé un couvercle 20. Dans l'espace délimité par la plaque tubulaire 12, le prolongement de l'enveloppe 14 et le couvercle 20 est placé un bac circulaire, à fond plat et perforé 22 qui constitue le dispositif de répartition du liquide. Ce bac repose sur la plaque tubulaire supérieure par l'intermédiaire de pieds 24 de telle sorte que le fond du bac soit à l'écart des chapeaux 16. Chaque trou 25 percé dans le fond du bac 22 se trouve à la verticale d'un chapeau 16, approximativement dans l'axe du tube central recouvert par le chapeau, le nombre de trous étant égal au nombre de chapeaux. En réduisant le nombre de trous, on peut leur donner un diamètre suffisant pour éviter tout problème de bouchage et d'encrassement tout en maintenant dans le bac une hauteur de liquide minimale, même aux plus faibles débits.

Le bac à une hauteur suffisante pour absorber sans déborder le débit maximal envisagé pour l'évaporation.

Une ou plusieurs tubulures d'alimentation 26 sont prévues au-dessus du bac 22. A la sortie de chaque tubulure, on à placé un jeu de déflecteurs coniques 28 superposés et percés d'une ouverture centrale, le diamètre des déflecteurs et de l'ouverture centrale diminuant du déflecteur supérieur au déflecteur inférieur, pour répartir le liquide sur toute la surface du bac.

Le bac peut être compartimenté, par exemple par des cloisons radiales, et dans ce cas on prévoiera au moins une tubulure d'alimentation par compartiment pour assurer une alimentation du bac en liquide la moins turbulente possible. Pour la même raison, on peut placer au-dessus du bac 22 un autre bac à fond perforé où la vapeur produite par détente se dégage du liquide.

Certains équipements supplémentaires peuvent être placés à l'intérieur du bac 22 pour limiter autant que possible les courants de liquide horizontaux provoqués par l'alimentation, ces courants pouvant engendrer une déviation des filets de liquide s'échappant du bac par les trous 25 et ainsi perturber la répartition du liquide. Cet équipement pourra, par exemple, être constitué par une tôle perforée ou un caillebotis 29.

Le liquide s'échappant par chaque orifice 25 du bac 22 vient chuter sur les chapeaux 16 coiffant les tubes 10a et par éclatement sur ces chapeaux vient arroser les tubes 10b entourant les tubes 10a.

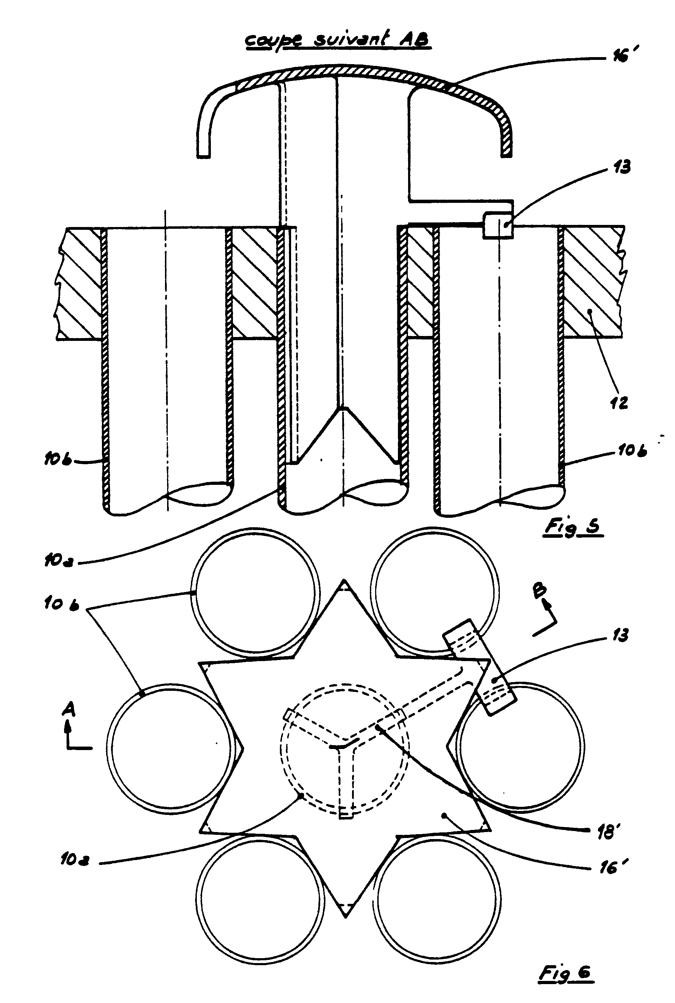

A la place des chapeaux ronds du type représenté sur les figures 3 et 4 an pourrait utiliser des chapeaux à bord découpé en étoile tels que celui représenté sur les figures 5 et 6. Les branches de l'étoile sont recourbées vers le bas et recouvrent partiellement les zones de la plaque tubulaire 12 comprises entre les tubes 10b entourant le tube 10a recouvert par le chapeau 16'. Dans la forme de réalisation représentée le chapeau ne recouvre pas les orifices des tubes 10b, les bords des branches étant tangents aux prolongements virtuels des tubes; en variante, le chapeau pourrait recouvrir une faible fraction, inférieure à 20 %, de la section de ces orifices.

Pour faciliter le positionnement des chapeaux 16' au montage et maintenir ceux-ci en position correcte en service, chaque chapeau est muni d'un guide 13 constitué par une pièce en forme de U renversé qui est solidaire du profilé 18' et dont les branches pénètrent dans deux tubes 10b voisins.

On pourrait aussi recouvrir chaque tube d'un chapeau plat ou bombé, de diamètre plus faible, en conservant la même distribution des trous dans le fond du bac 22, c'est- à-dire en prévoyant pour chaque groupe de sept tubes un seul trou placé à la verticale du tube central du groupe. Le nombre de tubes et leur disposition dans chaque groupe peuvent évidemment être différents de ceux décrits cidessus, à titre d'exemple. Le bac à fond perforé pourrait être remplacé par une plaque perforée dont le bord serait soudé à l'enveloppe 14. Il est bien entendu que ces modifications et toutes celles qui résultent de la substitution de moyens équivalents à ceux décrits entrent dans le cadre de l'invention.

## Revendications

1. Evaporateur à flot descendant comportant un faisceau de tubes verticaux (10) dont les extrémités sont fixées à des plaques tubulaires supérieure (12) et inférieure et un dispositif de répartition du liquide comprenant une plaque perforée (22) placée au-dessus de la plaque tubulaire supérieure, à l'écart de celle-ci, caractérisé en ce que le nombre de trous (25) percés dans la plaque perforée (22) est inférieur au nombre des tubes du faisceau (10), en ce que chaque trou (25) de la plaque perforée se trouve à la verticale du tube central (10a) d'un groupe de tubes (10a + 10b) et en ce que l'orifice dudit tube central est recouvert d'un chapeau (16) dont le diamètre est supérieur à celui du tube et dont le bord est situé à l'écart de la plaque tubulaire supérieure (12).

2. Evaporateur selon la revendication 1, caractérisé en ce que, dans chaque groupe de tubes, les tubes (10b) entourant le tube central (10a) sont également recouverts de chapeaux.

3. Evaporateur selon la revendication 1, caractérisé en ce que le chapeau (16) coiffant le tube central (10a) de chaque groupe recouvre partiellement les orifices des autres tubes (10b) du groupe.

4. Evaporateur selon la revendication 3, caractérisé en ce que chaque chapeau (16) recouvre environ le quart de la section des orifices des tubes (10b) entourant le tube central (10a) du groupe respectif.

5. Evaporateur selon la revendication 1, 2, 3 ou 4, caractérisé en ce que les chapeaux (16) sont bombés et comportent un bord légèrement évasé et incliné d'environ 10° par rapport à la verticale.

6. Evaporateur selon la revendication 1, caractérisé en ce que le bord des chapeaux (16') est découpé en étoile et les branches de l'étoile recouvrent partiellement les zones de la plaque tubulaire (12) comprises entre les tubes (10b) entourant le tube central (10a) de chaque groupe.

7. Evaporateur selon la revendication 6, caractérisé en ce que chaque chapeau est muni d'un guide (13) qui assure un positionnement correct du chapeau (16') par rapport aux tubes (10).

8. Evaporateur selon l'une quelconque des revendications précédentes, caractérisé en ce que les chapeaux (16, 16') sont fixés sur l'extrémité supérieure de profilés (18) dont la partie inférieure est introduite dans les tubes (16) respectifs et qui reposent sur l'extrémité supérieure des tubes.

9. Evaporateur selon l'une quelconque des revendications précédentes, caractérisé en ce que le dispositif de répartition est constitué par un bac à fond perforé (22) reposant par l'intermédiaire de pieds sur la plaque tubulaire supérieure (12).

10. Evaporateur selon la revendication 9, caractérisé par des moyens (29) placés à l'intérieur du bac (22) pour limiter les courants horizontaux de liquide dans le bac.

**Patentansprüche**

1. Fallstromverdampfer, welcher ein aus vertikalen Rohren bestehendes Bündel (10) umfasst, deren Enden an oberen und unteren Rohrplatten (12) befestigt sind, sowie einen Flüssigkeitsverteiler, welcher aus einer über der oberen Rohrplatte und von letzterer entfernt angeordneten Lochplatte (22) besteht, dadurch gekennzeichnet, dass die Anzahl der in der Lochplatte (22) vorgesehenen Löcher (25) geringer ist als die Anzahl der das Bündel (10) bildenden Rohre, dass sich jedes Loch (25) der Lochplatte vertikal zum mittleren Rohr (10a) einer Gruppe von Rohren (10a + 10b) befindet und dass die Öffnung besagten mittleren Rohres von einer Kappe (16) überdeckt wird, deren Durchmesser grösser ist als der des Rohres und deren Rand von der oberen Rohrplatte (12) entfernt angeordnet ist.

2. Verdampfer gemäss Anspruch 1, dadurch gekennzeichnet, dass die das mittlere Rohr (10a) umgebenden Rohre (10b) jeder Rohrgruppe ebenfalls von Kappen überdeckt sind.

3. Verdampfer gemäss Anspruch 1, dadurch gekennzeichnet, dass die das mittlere Rohr (10a) überdeckende Kappe (16) jeder Gruppe teilweise die Öffnungen der anderen Rohre (10b) der Gruppe überdeckt.

4. Verdampfer gemäss Anspruch 3, dadurch gekennzeichnet, dass jede Kappe (16) ca. ein Viertel des Querschnitts der Öffnungen der das mittlere Rohr (10a) der entsprechenden Rohrgruppe umgebenden Rohre (10b) überdeckt.

5. Verdampfer gemäss Anspruch 1, 2, 3 oder 4, dadurch gekennzeichnet, dass die Kappen (16) gewölbt sind und dass ihr Rand leicht erweitert und ca. 10° zur Vertikalen geneigt ist.

6. Verdampfer gemäss Anspruch 1, dadurch gekennzeichnet, dass der Rand der Kappen (16') sternförmig ausgeschnitten ist, und dass die Arme des Sterns teilweise die zwischen den das mittlere Rohr (10a) jeder Gruppe umgebenden Rohren (10b) liegende Zone der Rohrplatten (12) überdecken.

7. Verdampfer gemäss Anspruch 6, dadurch gekennzeichnet, dass jede Kappe mit einer Führung (13) versehen ist, die die korrekte Positionierung der Kappen (16') im Verhältnis zu den Rohren (10) sichert.

8. Verdampfer gemäss irgendeinem der vorstehenden Ansprüche, dadurch gekennzeichnet, dass die Kappen (16, 16') am oberen Ende von Profilen (18) befestigt sind, deren unterer Teil in die entsprechenden Rohre (16) eingeführt wird, und die auf dem oberen Ende der Rohre aufliegen.

9. Verdampfer gemäss irgendeinem der vorstehenden Ansprüche, dadurch gekennzeichnet, dass der Verteiler aus einem Kasten mit Lochboden (22) besteht, welcher sich mittels Füssen auf der oberen Rohrplatte (12) abstützt.

10. Verdampfer gemäss Anspruch 9, dadurch gekennzeichnet, dass im Kasten (22) Mittel (29) vorgesehen sind, um die horizontale Strömung der Flüssigkeit im Kasten zu begrenzen.

**Claims**

1. Falling film evaporator including a bundle of vertical tubes (10) the ends of which are attached to an upper (12) and a lower tube plates, and liquid- distribution device consisting of a perforated plate (22) installed above the upper tube plate, at a distance of it, characterized in that the number of holes (25) bored in the perforated plate (22) is smaller than the number of tubes of bundle (10), in that each hole (25) of the perforated plate is right above the central tube (10a) of a group of tubes (10a + 10b), and in that the opening of the same central tube is covered with a cap (16) the diameter of which is greater that the tube's diameter, and whose edge is at a distance of the upper tube plate (12).

2. Evaporator according to claim 1, characterized in that, in each group of tubes, the tubes (10b) surrounding central tube (10a) are also covered with caps.

3. Evaporator according to claim 1, characterized in that cap (16) covering the central tube (10a) of each group partly covers the openings of the other tubes (10b) of the group.

4. Evaporator according to claim 3, characterized in that each cap (16) covers approximately one fourth of the openings'sectional area of the tubes (10b) surrounding the central tube (10a) of the group concerned.

5. Evaporator according to claim 1, 2, 3 or 4, characterized in that the caps (16) are dome- shaped, and have a slightly bell-shaped edge inclined by approximately 10° from the vertical.

6. Evaporator according to claim 1, characterized in that the edge of caps (16') is star shaped, and the star arms partly cover those zones of tube plate (12) lying between the tubes (10b) surrounding the central tube (10a) of each group.

7. Evaporator according to claim 6, characterized in that each cap is provided with a guide (13) ensuring the correct positioning of cap (16') in relation to the tubes (10).

8. Evaporator according to any of above claims, characterized in that caps (16, 16') are fastened on the top end of section-irons (18) whose lower part is housed in the corresponding tubes (16), and which rest on the upper end of the tubes.

9. Evaporator according to any of the above claims, characterized in that the distribution device consists of a perforated-bottom tank (22) resting on the upper tube plate (12) by means of legs.

10. Evaporator according to claim 9, characterized by means (29) mounted inside tank (22) to limit the horizontal streams of liquid in the tank.

26

20

29

28

25

22

16

14

24

12

10b

10

10a

_Fig 1_

16

12

10b

10a

_Fig 2_

_Fig 3_

_Fig 4_

coupe suivant AB

16'

13

12

10b

10b

Fig 5

10a

B

10b

A

13

18'

16'

10a

Fig 6